# EUROPEAN PATENT APPLICATION

(11) **EP 4 848 372 A1**
(43) Date of publication of application: **02.12.2026**
(21) Application number: 25877706.9
(22) Date of filing: 24.09.2025
(51) Int. Cl.: H01M 4/525, H01M 4/505, H01M 4/36, H01M 4/02

(54) **POSITIVE ELECTRODE ACTIVE MATERIAL AND LITHIUM SECONDARY BATTERY COMPRISING SAME**

(30) Priority: 07.10.2024 KR 20240135604; 23.09.2025 KR 20250136726
(71) Applicant: EcoPro BM Co., Ltd, Cheongju-si, Chungcheongbuk-do 28116 (KR)
(72) Inventor: MOON, Chae Won, Cheongju-si, Chungcheongbuk-do 28116 (KR); LIM, Ra Na, Cheongju-si, Chungcheongbuk-do 28116 (KR); KIM, Sang Hyun, Cheongju-si, Chungcheongbuk-do 28116 (KR)
(74) Representative: Vossius & Partner Patentanwälte Rechtsanwälte mbB
(86) International application number: PCT/KR2025/014938
(87) International publication number: WO 2026/079734

(57) **Abstract**

The present invention relates to a positive electrode active material and a lithium secondary battery comprising the same, and more specifically, the present invention relates to a positive electrode active material including a lithium transition metal oxide consisting of a single grain and a lithium transition metal oxide in which a plurality of grains are agglomerated, wherein the energy density of the positive electrode active material can be improved by reducing the proportions of the lithium transition metal oxide consisting of a single grain and the lithium transition metal oxide in which a plurality of grains are agglomerated present in the positive electrode active material, and the proportion of isolated grains in the lithium transition metal oxide in which a plurality of grains are agglomerated, and further capacity loss caused by isolated grains can be prevented and mitigated beforehand, and a lithium secondary battery comprising the same.

## Description

### BACKGROUND

### 1. Field of the Invention

The present invention relates to a positive electrode active material and a lithium secondary battery comprising the same, and more particularly, the present invention relates to a positive electrode active material including a lithium transition metal oxide consisting of a single grain and a lithium transition metal oxide in which a plurality of grains are agglomerated, wherein the energy density of the positive electrode active material can be improved by reducing the proportions of the lithium transition metal oxide consisting of a single grain and the lithium transition metal oxide in which a plurality of grains are agglomerated present in the positive electrode active material, and the proportion of isolated grains in the lithium transition metal oxide in which a plurality of grains are agglomerated, and further capacity loss caused by isolated grains can be prevented and mitigated beforehand, and a lithium secondary battery comprising the same.

### 2. Discussion of Related Art

A battery stores electric power by using materials capable of an electrochemical reaction at a positive electrode and a negative electrode. Among these, a representative example is a lithium secondary battery that stores electric power by using a difference in chemical potential generated during intercalation/deintercalation of lithium ions at a positive electrode and a negative electrode.

The lithium secondary battery is manufactured using materials capable of reversible intercalation/deintercalation of lithium ions as positive and negative electrode active materials, and filling an organic electrolyte solution or a polymer electrolyte solution between the positive electrode and the negative electrode.

As a positive electrode active material of a lithium secondary battery, a lithium transition metal oxide is used, and as examples thereof, composite oxides such as LiCoO₂, LiMn₂O₄, LiNiO₂, LiMnO₂ and the like are being studied.

Among the positive electrode active materials, LiCoO₂ is most widely used because of excellent cycle life characteristics and excellent charge/discharge efficiency; however, its price competitiveness is limited because it is expensive due to resource limitations of cobalt used as a raw material.

Lithium manganese oxides, such as LiMnO₂, LiMn₂O₄ and the like, offer advantages of excellent thermal stability and low cost, but issues of small capacity and poor high-temperature characteristics have been raised. In addition, a LiNiO₂-based positive electrode active material has an advantage of high discharge capacity, but is difficult to synthesize due to cation mixing between Li and Ni, as well as very poor rate characteristics and cycle life characteristics of the synthesized positive electrode active material.

Accordingly, in order to improve low rate characteristics and cycle life characteristics while maintaining the high reversible capacity of LiNiO₂, a ternary-type lithium transition metal oxide such as so-called NCM (Ni-Co-Mn) or NCA (Ni-Co-Al), or a quaternary-type lithium transition metal oxide such as NCMA (Ni-Co-Mn-Al), in which a part of nickel is substituted with cobalt, manganese and/or aluminum, has been developed. Since the reversible capacity becomes lower as the content of nickel in such ternary-type or quaternary-type lithium transition metal oxides is smaller, recently, studies to increase the content of nickel in lithium transition metal oxides have been actively conducted.

However, as the content of nickel in the lithium transition metal oxide increases, cation mixing in the crystal structure increases, thereby degrading stability, or the content of unreacted lithium impurities such as LiOH, Li₂CO₃ and the like on the surface increases.

In addition, most lithium transition metal oxides have a secondary particle form in which a plurality of primary particles are agglomerated, and the larger the number of primary particles constituting the secondary particle, the larger the specific surface area becomes. As the specific surface area of the lithium transition metal oxide becomes larger, when strain caused by random volume contraction/expansion of the primary particles is accumulated by repeated charging/discharging, the possibility that cracks occur in the secondary particles increases, and stability may be rapidly degraded by side reactions with the electrolyte solution on the surfaces of the primary particles.

Therefore, recently, in order to solve the above-described problem, there have been attempts to reduce the specific surface area of the lithium transition metal oxide by inducing the growth of grains constituting the lithium transition metal oxide, but since it is difficult to uniformly grow the size of the grains, there is a problem that the sizes and distributions of the grains and the lithium transition metal oxide become non-uniform. In addition, when growth of grains is induced, there is a problem that kinetic characteristics are degraded as the overall particle size of the lithium transition metal oxide increases.

In particular, isolated grains not exposed to the outside are inevitably present within particles in which a plurality of grains are agglomerated. When the size of the grains is small, even if isolated grains are present inside, diffusion of lithium ions between adjacent grains is easy during charging/discharging, and thus capacity loss due to the presence of the isolated grains therein is insignificant.

On the other hand, when the lithium transition metal oxide is present as an agglomerate with a relatively small number (for example, 10 or fewer or 20 or fewer) of grains as grains are grown through so-called single crystallization, the loss of lithium ion diffusion paths due to the presence of isolated grains therein and capacity loss resulting therefrom may be maximized due to kinetic degradation.

In addition, during repeated charging/discharging, when cracks are generated in particles due to random volume contraction/expansion of grains and surfaces of isolated grains therein are newly exposed, side reactions may sharply increase or may lead to an increase in resistance of the positive electrode active material.

### SUMMARY OF THE INVENTION

In the lithium secondary battery market, the growth of lithium secondary batteries for electric vehicles is playing a role in driving the market, and accordingly, demand for positive electrode active materials used in lithium secondary batteries is also continuously increasing.

For example, conventionally, lithium secondary batteries using lithium iron phosphate (LFP) have been mainly used from the viewpoint of securing safety and the like, but recently, the use of nickel-based lithium transition metal oxides having a larger energy capacity per weight than LFP has been increasing (of course, relatively inexpensive LFP is still used to reduce costs).

In addition, a nickel-based lithium transition metal oxide mainly used recently as a positive electrode active material of a high-capacity lithium secondary battery generally has a ternary-type composition such as NCM (Ni-Co-Mn) or NCA (Ni-Co-Al) or a quaternary-type composition such as NCMA (Ni-Co-Mn-Al).

As described above, in order to improve the energy density of such ternary-type or quaternary-type nickel-based lithium transition metal oxides while preventing deterioration in cycle life and stability, it may be advantageous to induce the growth of grains constituting the lithium transition metal oxide. However, when the growth of grains is induced through so-called single crystallization, kinetics are degraded, and due to the kinetic degradation, the loss of lithium ion diffusion paths due to the presence of isolated grains therein and capacity loss resulting therefrom may be maximized.

Therefore, when the growth of grains constituting the lithium transition metal oxide is induced so as to reduce the proportion of isolated grains therein, it is expected that capacity loss can be reduced.

Under the above-described background, an object of the present invention is to provide a positive electrode active material including a lithium transition metal oxide consisting of a single grain and a lithium transition metal oxide in which a plurality of grains are agglomerated, wherein kinetic degradation can be mitigated and energy density can be improved by controlling the proportions of the lithium transition metal oxide consisting of a single grain and the lithium transition metal oxide in which a plurality of grains are agglomerated, which are present in the positive electrode active material.

In addition, an object of the present invention is to provide a positive electrode active material including a lithium transition metal oxide consisting of a single grain and a lithium transition metal oxide in which a plurality of grains are agglomerated, wherein capacity loss caused by isolated grains can be prevented and mitigated by reducing the proportion of isolated grains in the lithium transition metal oxide in which a plurality of grains are agglomerated.

In addition, another object of the present invention is to provide a lithium secondary battery using the positive electrode active material defined herein.

The objects of the present invention are not limited to the objects mentioned above, and other objects and advantages of the present invention that are not mentioned can be understood by the following description and will be more clearly understood by embodiments of the present invention. In addition, it will be easily understood that the objects and advantages of the present invention can be realized by means shown in the claims and combinations thereof.

The present invention for solving the above-described technical problem includes the following inventions.
[1] A positive electrode active material including a lithium transition metal oxide consisting of a single grain and a lithium transition metal oxide in which a plurality of grains are agglomerated, wherein, based on a cross-sectional SEM image of the positive electrode active material, the proportion of grains isolated by being surrounded by a plurality of grains among all grains constituting the positive electrode active material is 10% or less.
[2] The positive electrode active material according to [1], wherein, based on the cross-sectional SEM image of the positive electrode active material, the proportion of the grains isolated by being surrounded by a plurality of grains among all grains constituting the positive electrode active material is 1.5% or more.
[3] The positive electrode active material according to [1] or [2], wherein, based on the cross-sectional SEM image of the positive electrode active material, the proportion of the lithium transition metal oxide consisting of a single grain among all lithium transition metal oxides constituting the positive electrode active material is greater than 8% and 70% or less.
[4] The positive electrode active material according to any one of [1] to [3], wherein, based on the cross-sectional SEM image of the positive electrode active material, the proportion of the lithium transition metal oxide in which a plurality of grains are agglomerated among all lithium transition metal oxides constituting the positive electrode active material is 30% or more and less than 92%.
[5] The positive electrode active material according to any one of [1] to [4], wherein the average particle diameter (D₅₀) of the lithium transition metal oxide consisting of a single grain is 0.2 µm or more and 5.0 µm or less.
[6] The positive electrode active material according to any one of [1] to [5], wherein the average particle diameter (D₅₀) of the lithium transition metal oxide in which a plurality of grains are agglomerated is 1.0 µm or more and 10.0 µm or less.
[7] The positive electrode active material according to any one of [1] to [6], wherein the positive electrode active material satisfies Formula 1 below. [Formula 1] $\left({D}_{90}-{D}_{10}\right) / {D}_{50} < 0.65$ wherein, in Formula 1, based on the cross-sectional SEM image of the positive electrode active material, in a volume cumulative particle size distribution graph for grains constituting the positive electrode active material, D₁₀ denotes a grain size at which the volume cumulative amount becomes 10%, D₅₀ denotes a grain size at which the volume cumulative amount becomes 50%, and D₉₀ denotes a grain size at which the volume cumulative amount becomes 90%.
[8] The positive electrode active material according to any one of [1] to [7], wherein, based on the cross-sectional SEM image of the positive electrode active material, the grain size (D₅₀) at which the volume cumulative amount becomes 50% in a volume cumulative particle size distribution graph for grains constituting the positive electrode active material is 2.0 µm or more and 5.0 µm or less.
[9] The positive electrode active material according to any one of [1] to [8], wherein, based on the cross-sectional SEM image of the positive electrode active material, the grain size (D₁₀) at which the volume cumulative amount becomes 10% in a volume cumulative particle size distribution graph for grains constituting the positive electrode active material is greater than 1.75 µm and 3.0 µm or less.
[10] The positive electrode active material according to any one of [1] to [9], wherein, based on the cross-sectional SEM image of the positive electrode active material, the grain size (D₉₀) at which the volume cumulative amount becomes 90% in a volume cumulative particle size distribution graph for grains constituting the positive electrode active material is 3.0 µm or more and 4.9 µm or less.
[11] The positive electrode active material according to any one of [1] to [10], wherein the lithium transition metal oxide contains at least lithium and transition metals, and the content of nickel among the transition metals is 70 mol% or more.
[12] The positive electrode active material according to any one of [1] to [11], wherein the lithium transition metal oxide has an average composition represented by Chemical Formula 1 below.

   [Chemical Formula 1] LiₐNi_{1-(b+c+d)}Co_{b}Mn_{c}M1_{d}O₂

   wherein, in Chemical Formula 1,
   M1 is at least one selected from Na, K, Mg, Ba, B, Ce, Hf, Ta, Cr, F, Al, V, Ti, Fe, Zr, Zn, Si, Y, Nb, Ga, Sn, Mo, P, Sr, Ge, Nd, Gd and Cu, and
   0.95≤a≤1.15, 0≤b≤0.20, 0≤c≤0.20, 0≤d≤0.10, and 0.7≤1-(b+c+d).
   In addition, the present invention includes other aspects as follows.
[13] A positive electrode that includes the positive electrode active material according to any one of [1] to [12].
[14] A lithium secondary battery using the positive electrode according to [13].

According to the present invention, it is possible to mitigate kinetic degradation and improve energy density by controlling the proportions of the lithium transition metal oxide consisting of a single grain and the lithium transition metal oxide in which a plurality of grains are agglomerated, present in the positive electrode active material.

In addition, according to the present invention, it is possible to prevent and/or mitigate capacity loss caused by isolated grains beforehand by reducing the proportion of isolated grains in the lithium transition metal oxide in which a plurality of grains are agglomerated.

In addition, according to the present invention, it is possible to prevent and/or mitigate side reactions and/or an increase in resistance of the positive electrode active material beforehand, which occur as surfaces of isolated grains therein are newly exposed due to random volume contraction/expansion of grains during repeated charging/discharging, by reducing the proportion of isolated grains in the lithium transition metal oxide in which a plurality of grains are agglomerated.

In addition, according to the present invention, it is possible to prevent and/or mitigate beforehand an overvoltage phenomenon that occurs when using a positive electrode active material exhibiting a non-uniform particle size and/or distribution as growth of grains is irregularly induced through so-called single crystallization, by controlling particle size distributions of the lithium transition metal oxide consisting of a single grain and the lithium transition metal oxide in which a plurality of grains are agglomerated present in the positive electrode active material.

### BRIEF DESCRIPTION OF THE DRAWINGS

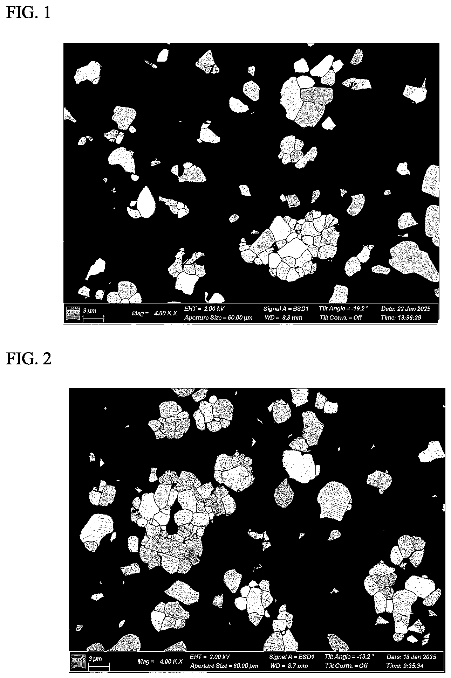

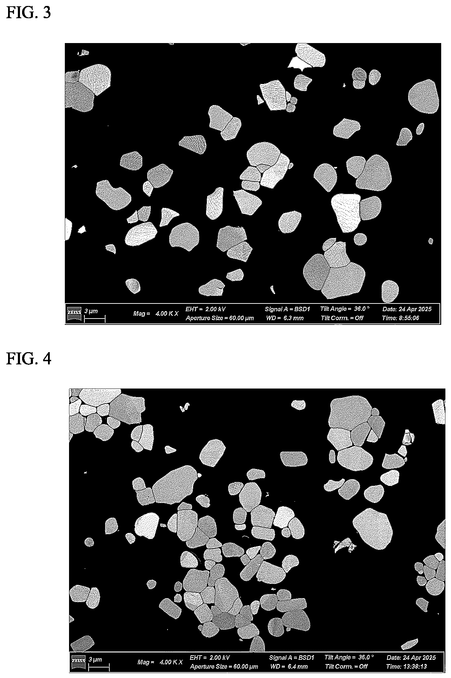

FIGS. 1 to 4 are respective cross-sectional SEM images of PAM1 to PAM4 manufactured according to Preparation Example 1.

### DETAILED DESCRIPTION OF EXEMPLARY EMBODIMENTS

For convenience, specific terms are defined herein in order to more easily understand the present invention. Unless otherwise defined herein, scientific terms and technical terms used in the present invention will have meanings generally understood by those of ordinary skill in the art. In addition, unless specifically specified in the context, it should be understood that a term in a singular form also includes its plural form, and a term in a plural form also includes its singular form.

### Positive Electrode Active Material

Herein, a positive electrode active material includes a lithium transition metal oxide capable of reversible intercalation/deintercalation of lithium ions. Here, the lithium transition metal oxide means an oxide in which lithium and at least one transition metal are combined.

The lithium transition metal oxide is a composite metal oxide capable of intercalation/deintercalation of lithium ions, and has a layered crystal structure belonging to an R-3m space group. The lithium transition metal oxide having a layered crystal structure exhibits a specific peak in a region where 20 is 18° to 20° (for example, a region of 2θ=18.6±1°) among diffraction patterns obtained from XRD analysis.

The lithium transition metal oxide contains at least lithium and transition metals. The transition metals may include at least one, at least two, or all selected from nickel, cobalt and manganese.

Preferably, the lithium transition metal oxide may be a lithium nickel-based composite oxide containing nickel. In addition, the lithium transition metal oxide may be a lithium nickel-based composite oxide containing nickel and cobalt.

In addition, in order to improve low rate characteristics and cycle life characteristics while maintaining the high reversible capacity of LiNiO₂, the lithium nickel-based composite oxide may be a ternary-type lithium transition metal oxide such as so-called NCM (Ni-Co-Mn) or NCA (Ni-Co-Al) or a quaternary-type lithium transition metal oxide such as NCMA (Ni-Co-Mn-Al), in which a part of nickel is substituted with cobalt, manganese and/or aluminum. The ternary-type or quaternary-type lithium transition metal oxide may further contain a dopant other than nickel, cobalt, manganese and aluminum.

The lithium transition metal oxide may be a cobalt-free type lithium transition metal oxide that does not contain cobalt in bulk particles. The cobalt-free type lithium transition metal oxide may further contain a dopant other than nickel, cobalt and manganese.

The lithium transition metal oxide may have an average composition represented by Chemical Formula 1 below. The average composition of the lithium transition metal oxide may be measured according to a known ICP analysis method using an inductively coupled plasma spectrometer (ICP).

[Chemical Formula 1] LiₐNi_{1-(b+c+d)}Co_{b}Mn_{c}M1_{d}O₂

In Chemical Formula 1, M1 is at least one selected from Na, K, Mg, Ba, B, Ce, Hf, Ta, Cr, F, Al, V, Ti, Fe, Zr, Zn, Si, Y, Nb, Ga, Sn, Mo, P, Sr, Ge, Nd, Gd and Cu, and 0.95≤a≤1.15, 0≤b≤0.20, 0≤c≤0.20, 0≤d≤0.10, and 0.7≤1-(b+c+d).

In Chemical Formula 1, a, which represents a ratio of lithium to all elements other than lithium in the lithium transition metal oxide (Li/Ni+Co+Mn+M1), may be 0.95 or more, 0.96 or more, 0.97 or more, 0.98 or more, 0.99 or more, 1.00 or more, 1.01 or more, 1.02 or more, 1.03 or more, 1.04 or more, or 1.05 or more. In addition, a may be 1.15 or less, 1.14 or less, 1.13 or less, 1.12 or less, 1.11 or less, 1.10 or less, 1.09 or less, 1.08 or less, 1.07 or less, 1.06 or less, or 1.05 or less. The upper and lower limits of the molar fraction of lithium to all elements other than lithium in the lithium transition metal oxide may be appropriately selected within a range satisfying the above-described definition. When the molar fraction of lithium in the lithium transition metal oxide satisfies the above range, a stable crystal structure can be formed.

In Chemical Formula 1, 1-(b+c+d), which represents a molar fraction of nickel to all elements other than lithium in the lithium transition metal oxide (Ni/Ni+Co+Mn+M1), may be 0.70 or more, 0.72 or more, 0.75 or more, 0.77 or more, 0.80 or more, 0.82 or more, 0.83 or more, 0.84 or more, 0.85 or more, 0.86 or more, 0.87 or more, 0.88 or more, 0.89 or more, 0.90 or more, 0.91 or more, 0.92 or more, 0.93 or more, 0.94 or more, or 0.95 or more. In addition, 1-(b+c+d) may be less than 1.0, 0.99 or less, 0.98 or less, 0.97 or less, or 0.96 or less. The upper and lower limits of the molar fraction of nickel to all elements other than lithium in the lithium transition metal oxide may be appropriately selected within a range satisfying the above-described definition. When the molar fraction of nickel in the lithium transition metal oxide satisfies the above range, a stable crystal structure can be formed, and high energy density can be exhibited.

In Chemical Formula 1, b, which represents a molar fraction of cobalt to all elements other than lithium in the lithium transition metal oxide (Co/Ni+Co+Mn+Ml), may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide is a cobalt-free type lithium transition metal oxide, b may be 0. When the lithium transition metal oxide contains cobalt, b may be greater than 0, 0.01 or more, or 0.02 or more. The upper and lower limits of the molar fraction of cobalt to all elements other than lithium in the lithium transition metal oxide may be appropriately selected within a range satisfying the above-described definition. When the molar fraction of cobalt in the lithium transition metal oxide satisfies the above range, a stable crystal structure can be formed, and good output characteristics can be exhibited.

In Chemical Formula 1, c, which represents a molar fraction of manganese to all elements other than lithium in the lithium transition metal oxide (Mn/Ni+Co+Mn+M1), may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide contains manganese, c may be greater than 0, 0.01 or more, or 0.02 or more. The upper and lower limits of the molar fraction of manganese to all elements other than lithium in the lithium transition metal oxide may be appropriately selected within a range satisfying the above-described definition. When the molar fraction of manganese in the lithium transition metal oxide satisfies the above range, a stable crystal structure can be formed.

In Chemical Formula 1, M1 means a dopant that may be present in the crystal structure of the lithium transition metal oxide. The lithium transition metal oxide has a layered crystal structure in which a lithium layer containing lithium and a transition metal layer containing a transition metal are alternately arranged, and the dopant may be incorporated into at least one crystal layer of the lithium layer and the transition metal layer.

When the lithium transition metal oxide contains a dopant, d in Chemical Formula 1, which represents a molar fraction of the dopant relative to all elements other than lithium in the lithium transition metal oxide (M1/Ni+Co+Mn+M1), may be 0.10 or less, 0.09 or less, 0.08 or less, 0.07 or less, 0.06 or less, 0.05 or less, 0.045 or less, 0.04 or less, 0.035 or less, 0.03 or less, 0.025 or less, 0.02 or less, 0.015 or less, 0.01 or less, 0.009 or less, 0.008 or less, 0.007 or less, 0.006 or less, 0.005 or less, 0.004 or less, 0.003 or less, 0.002 or less, or 0.001 or less.

When the lithium transition metal oxide optionally contains a dopant, the dopant may include at least one selected from Na, K, Mg, Ba, B, Ce, Hf, Ta, Cr, F, Al, V, Ti, Fe, Zr, Zn, Si, Y, Nb, Ga, Sn, Mo, P, Sr, Ge, Nd, Gd and Cu, preferably at least one selected from Mg, Ca, Ba, B, Al, V, Ti, Fe, Zr, Zn, Si, Nb, Mo, W and Cu, and more preferably at least one selected from Mg, Ca, Ba, B, Al, Ti, Zr, Si, Nb, Mo and W. The type, combination and content of the dopant may be appropriately selected within a range that does not adversely affect the electrochemical characteristics and stability of the positive electrode active material.

The dopant may be doped into the lithium transition metal oxide by mixing a precursor of the lithium transition metal oxide and a dopant-containing raw material and then performing heat treatment (calcination). The lithium transition metal oxide may be obtained by mixing a precursor of the lithium transition metal oxide, a lithium raw material (for example, LiOH, Li₂CO₃ or a combination thereof) and the dopant-containing raw material and then performing heat treatment (calcination). As the dopant-containing material, fluorides, chlorides, carbonates, sulfates, nitrates, phosphates, oxides and/or hydroxides and the like, containing the above-described dopant, may be used.

Herein, the positive electrode active material includes a lithium transition metal oxide consisting of a single grain and a lithium transition metal oxide in which a plurality of grains are agglomerated. Herein, for convenience, the lithium transition metal oxide consisting of a single grain may be referred to as a first lithium transition metal oxide, and the lithium transition metal oxide in which a plurality of grains are agglomerated may be referred to as a second lithium transition metal oxide. The positive electrode active material may include a plurality of lithium transition metal oxides consisting of a single grain and a plurality of lithium transition metal oxides in which a plurality of grains are agglomerated.

The grain may have a rod shape, an elliptical shape and/or an amorphous shape. In addition, unless particularly intended in a manufacturing process, grains having various shapes may be present in the same positive electrode active material. In addition, the grain means a particle unit in which a grain boundary is not apparent when observed at a magnification of 5,000 times to 20,000 times using a scanning electron microscope.

Generally, a ternary-type or quaternary-type lithium transition metal oxide has a secondary particle form in which hundreds or thousands of unit particles are agglomerated. It can be said that the second lithium transition metal oxide defined herein also has a secondary particle form in which a plurality of grains are agglomerated. However, herein, the second lithium transition metal oxide is distinguished from a conventional polycrystalline lithium transition metal oxide having a secondary particle form in which hundreds or thousands of unit particles are agglomerated in that it has a form in which 30 or fewer, 25 or fewer, 20 or fewer, 15 or fewer, and/or 10 or fewer grains are agglomerated. In addition, primary particles constituting the conventional polycrystalline lithium transition metal oxide have a particle diameter smaller than that of the grain defined herein (for example, less than 0.2 µm).

The second lithium transition metal oxide may have a form in which 30 or fewer, 25 or fewer, 20 or fewer, 15 or fewer, and/or 10 or fewer grains are agglomerated. The number of grains constituting the second lithium transition metal oxide may vary depending on the size of the grains. For example, as an average size of grains constituting the second lithium transition metal oxide becomes larger, the number of grains constituting the second lithium transition metal oxide may become smaller.

The number of grains constituting the second lithium transition metal oxide may be measured from the cross-sectional SEM image of the second lithium transition metal oxide according to a known method. In addition, herein, the number of grains constituting the second lithium transition metal oxide may be calculated as an average value of the number of grains constituting a plurality of second lithium transition metal oxides observed from the cross-sectional SEM image of the positive electrode active material.

As the first lithium transition metal oxide consists of a single grain, an average particle diameter of the grain becomes an average particle diameter of the first lithium transition metal oxide. An average particle diameter (D₅₀) of the first lithium transition metal oxide may be 0.2 µm or more and 5.0 µm or less, 0.2 µm to 4.5 µm, 0.2 µm to 4.0 µm, 0.5 µm to 5 µm, 0.5 µm to 4.5 µm, 0.5 µm to 4.0 µm, 1.0 µm to 5.0 µm, 1.0 µm to 4.5 µm, 1.0 µm to 4.0 µm, 1.5 µm to 5.0 µm, 1.5 µm to 4.5 µm, 1.5 µm to 4.0 µm, 2.0 µm to 5.0 µm, 2.0 µm to 4.5 µm or 2.5 µm to 4.0 µm or less.

When the average particle diameter of the first lithium transition metal oxide is smaller than 0.5 µm, the specific surface area of the first lithium transition metal oxide and the positive electrode active material comprising the same becomes large, and degradation of stability due to side reactions with the electrolyte may be caused. On the other hand, when the average particle diameter of the first lithium transition metal oxide is larger than 5.0 µm, as growth of the grains is excessively induced, the diffusivity or kinetic characteristics of lithium ions through the first lithium transition metal oxide may rather be degraded.

An average particle diameter (D₅₀) of the second lithium transition metal oxide may be 1.0 µm or more, 2.0 µm or more, 3.0 µm or more, or 3.1 µm or more. In addition, an average particle diameter (D₅₀) of the second lithium transition metal oxide may be 10.0 µm or less, 9.0 µm or less, 8.0 µm or less, 7.0 µm or less, 6.0 µm or less, 5.0 µm or less, 4.0 µm or less, 3.8 µm or less, or 3.7 µm or less. The upper and lower limits of the average particle diameter (D₅₀) of the second lithium transition metal oxide may be appropriately selected within a range satisfying the above-described definition.

Grains constituting the second lithium transition metal oxide may have an average particle diameter corresponding to the average particle diameter of the first lithium transition metal oxide. For example, the average particle diameter (D₅₀) of grains constituting the second lithium transition metal oxide may be 0.2 µm or more and 5.0 µm or less, 0.2 µm to 4.5 µm, 0.2 µm to 4.0 µm, 0.5 µm to 5 µm, 0.5 µm to 4.5 µm, 0.5 µm to 4.0 µm, 1.0 µm to 5.0 µm, 1.0 µm to 4.5 µm, 1.0 µm to 4.0 µm, 1.5 µm to 5.0 µm, 1.5 µm to 4.5 µm, 1.5 µm to 4.0 µm, 2.0 µm to 5.0 µm, 2.0 µm to 4.5 µm or 2.5 µm to 4.0 µm or less.

The average particle diameter (D₅₀) of the grains, the first lithium transition metal oxide and the second lithium transition metal oxide may be calculated as an average value ([major axis length+minor axis length]/2) of a length in a major axis direction and a length in a minor axis direction of the unit particle. The average particle diameter may be calculated as an average value of particle diameters of all particles observed from surface SEM images and/or cross-sectional SEM images of lithium transition metal oxides constituting the positive electrode active material according to a known method.

According to the present invention, by controlling the particle size distributions of grains constituting the first lithium transition metal oxide and the second lithium transition metal oxide, it is possible to prevent and/or mitigate beforehand an overvoltage phenomenon that occurs when using a positive electrode active material exhibiting non-uniform particle size and/or distribution as grain growth is irregularly induced through so-called single crystallization.

The particle size distributions of grains constituting the first lithium transition metal oxide and the second lithium transition metal oxide may be measured through cross-sectional SEM image analysis of the positive electrode active material including the first lithium transition metal oxide and the second lithium transition metal oxide. After obtaining a volume cumulative particle size distribution graph from the sizes of a plurality (for example, 100 or more, 200 or more, 300 or more, 400 or more, 500 or more, 600 or more, 700 or more, 800 or more, 900 or more, or 1,000 or more) of grains constituting the first lithium transition metal oxide and the second lithium transition metal oxide observed from the cross-sectional SEM image, grain sizes corresponding to 10%, 50%, and 90% of the volume cumulative amount can be obtained.

When, based on the cross-sectional SEM image of the positive electrode active material, in a volume cumulative particle size distribution graph for grains constituting the positive electrode active material, D₁₀ denotes a grain size at which the volume cumulative amount becomes 10%, D₅₀ denotes a grain size at which the volume cumulative amount becomes 50%, and D₉₀ denotes a grain size at which the volume cumulative amount becomes 90%, the positive electrode active material may satisfy Formula 1 below. [Formula 1] $\left({D}_{90}-{D}_{10}\right) / {D}_{50} < 0.65$

In addition, (D₉₀-D₁₀)/D₅₀ measured according to the above-described method may be less than 0.65, 0.64 or less, 0.63 or less, 0.62 or less, or 0.61 or less. That (D₉₀-D₁₀)/D₅₀ measured according to the above-described method has a value less than 0.65 means that the plurality of grains constituting the first lithium transition metal oxide and the second lithium transition metal oxide have uniform sizes.

Based on the cross-sectional SEM image of the positive electrode active material, a grain size D₅₀ at which the volume cumulative amount becomes 50% in a volume cumulative particle size distribution graph for grains constituting the positive electrode active material may be 2.0 µm or more, 3.0 µm or more, or 3.1 µm or more. In addition, D₅₀ may be 5.0 µm or less, 4.0 µm or less, 3.8 µm or less, or 3.7 µm or less. The upper and lower limits of D₅₀ may be appropriately selected within a range satisfying the above-described definition.

Based on the cross-sectional SEM image of the positive electrode active material, a grain size (D₁₀) at which the volume cumulative amount becomes 10% in a volume cumulative particle size distribution graph for grains constituting the positive electrode active material may be greater than 1.75 µm, 1.8 µm or more, 1.85 µm or more, 1.9 µm or more, 1.95 µm or more, or 1.96 µm or more. In addition, D₁₀ may be 3.0 µm or less, 2.9 µm or less, 2.8 µm or less, 2.7 µm or less, 2.6 µm or less, 2.5 µm or less, 2.45 µm or less, or 2.43 µm or less. The upper and lower limits of D₁₀ may be appropriately selected within a range satisfying the above-described definition.

Based on the cross-sectional SEM image of the positive electrode active material, a grain size (D₉₀) at which the volume cumulative amount becomes 90% in a volume cumulative particle size distribution graph for grains constituting the positive electrode active material may be 3.0 µm or more, 3.1 µm or more, 3.2 µm or more, 3.3 µm or more, 3.4 µm or more, 3.5 µm or more, 3.6 µm or more, 3.7 µm or more, 3.8 µm or more, or 3.85 µm or more. In addition, D₉₀ may be 4.9 µm or less, 4.85 µm or less, 4.8 µm or less, 4.75 µm or less, 4.7 µm or less, 4.65 µm or less, or 4.63 µm or less. The upper and lower limits of D₉₀ may be appropriately selected within a range satisfying the above-described definition.

As D₁₀, D₅₀, D₉₀ and (D₉₀-D₁₀)/D₅₀ calculated from a volume cumulative particle size distribution graph for grains constituting the positive electrode active material based on the cross-sectional SEM image of the positive electrode active material satisfy the above-described definition, an overvoltage phenomenon that occurs when using a positive electrode active material exhibiting a non-uniform particle size and/or distribution can be prevented and/or mitigated beforehand.

According to the present invention, it is possible to mitigate kinetic degradation and improve energy density by controlling the proportions of the first lithium transition metal oxide and the second lithium transition metal oxide present in the positive electrode active material.

Based on the cross-sectional SEM image of the positive electrode active material, the proportion of the first lithium transition metal oxide among all lithium transition metal oxides constituting the positive electrode active material may be greater than 8%, 8.1% or more, 9% or more, 10% or more, 11% or more, 12% or more, 13% or more, 14% or more, 15% or more, 16% or more, 17% or more, 18% or more, 19% or more, or 20% or more. In addition, based on the cross-sectional SEM image of the positive electrode active material, the proportion of the first lithium transition metal oxide among all lithium transition metal oxides constituting the positive electrode active material may be 70% or less, 65% or less, 60% or less, 55% or less, 52% or less, 50% or less, 49% or less, 48% or less, 47% or less, 46% or less, or 45% or less. The upper and lower limits of the proportion of the first lithium transition metal oxide among all lithium transition metal oxides constituting the positive electrode active material may be appropriately selected within a range satisfying the above-described definition.

When grain growth is induced to increase the proportion of the first lithium transition metal oxide among all lithium transition metal oxides constituting the positive electrode active material, the proportion of grains isolated by being surrounded by a plurality of grains among all grains constituting the positive electrode active material can be reduced.

However, when grain growth is excessively induced in order to increase the proportion of the first lithium transition metal oxide among all lithium transition metal oxides constituting the positive electrode active material, the sizes and distributions of grains, the first lithium transition metal oxide, and/or the second lithium transition metal oxide become non-uniform, and the sizes of grains constituting the first lithium transition metal oxide and/or the second lithium transition metal oxide become excessively large, resulting in degradation of kinetic characteristics.

When the proportion of the first lithium transition metal oxide among all lithium transition metal oxides constituting the positive electrode active material exceeds 70%, capacity loss due to degradation of kinetic characteristics may occur.

In addition, due to excessive single crystallization for increasing the proportion of the first lithium transition metal oxide among all lithium transition metal oxides constituting the positive electrode active material, grain growth is irregularly induced, and accordingly, the sizes and distributions of grains constituting the positive electrode active material and the first lithium transition metal oxide and/or the second lithium transition metal oxide may become non-uniform. When a positive electrode active material exhibiting such a non-uniform particle size and/or distribution is used, capacity loss may occur due to an overvoltage phenomenon.

On the other hand, when the proportion of the first lithium transition metal oxide among all lithium transition metal oxides constituting the positive electrode active material is 8% or less, the proportion of grains isolated by being surrounded by a plurality of grains among all grains constituting the positive electrode active material may rather increase.

Based on the cross-sectional SEM image of the positive electrode active material, the proportion of the second lithium transition metal oxide among all lithium transition metal oxides constituting the positive electrode active material may be 30% or more, 35% or more, 40% or more, 45% or more, 46% or more, 47% or more, 48% or more, 49% or more, 50% or more, 51% or more, 52% or more, 53% or more, 54% or more, or 55% or more. In addition, the proportion of the second lithium transition metal oxide among all lithium transition metal oxides constituting the positive electrode active material may be less than 92%, 91% or less, 90% or less, 89% or less, 88% or less, 87% or less, 86% or less, 85% or less, 84% or less, 83% or less, 82% or less, 81% or less, or 80% or less. The upper and lower limits of the proportion of the second lithium transition metal oxide among all lithium transition metal oxides constituting the positive electrode active material may be appropriately selected within a range satisfying the above-described definition.

When the proportion of the second lithium transition metal oxide among all lithium transition metal oxides constituting the positive electrode active material exceeds 92%, the proportion of the second lithium transition metal oxide including grains isolated by being surrounded by a plurality of grains among the positive electrode active material may increase. In addition, the proportion of grains isolated by being surrounded by a plurality of grains among all grains constituting the positive electrode active material may increase.

In addition, when cracks occur in the second lithium transition metal oxide due to random volume contraction/expansion of grains during repeated charging/discharging, surfaces of isolated grains therein may be newly exposed. Due to the newly exposed surfaces of grains, side reactions with the electrolyte may increase, or the resistance of the positive electrode active material may increase.

Based on the cross-sectional SEM image of the positive electrode active material, the proportion of grains isolated by being surrounded by a plurality of grains among all grains constituting the positive electrode active material may be 10% or less, less than 10%, 9.5% or less, 9% or less, 8.5% or less, 8% or less, 7.5% or less, 7% or less, 6.5% or less, 6% or less, 5.5% or less, 5% or less, or 4.8% or less. In addition, based on the cross-sectional SEM image of the positive electrode active material, the proportion of grains isolated by being surrounded by a plurality of grains among all grains constituting the positive electrode active material may be 1.5% or more, 1.6% or more, 1.7% or more, 1.8% or more, 1.9% or more, or 2.0% or more.

By controlling the proportion of isolated grains among the positive electrode active material to be 10% or less, capacity loss caused by isolated grains can be prevented and/or mitigated beforehand. In addition, by controlling the proportion of isolated grains in the positive electrode active material to be 10% or less, side reactions and/or an increase in resistance of the positive electrode active material that occur as surfaces of isolated grains therein are newly exposed due to random volume contraction/expansion of grains during repeated charging/discharging can be prevented and/or mitigated beforehand.

Meanwhile, in order to control the proportion of isolated grains among the positive electrode active material to be less than 1.5%, the proportion of the first lithium transition metal oxide among all lithium transition metal oxides constituting the positive electrode active material cannot but be increased. In addition, as described above, when the growth of the grains is excessively induced in order to increase the proportion of the first lithium transition metal oxide among all lithium transition metal oxides constituting the positive electrode active material, the sizes and distributions of grains, the first lithium transition metal oxide and/or the second lithium transition metal oxide become non-uniform, and the sizes of grains constituting the first lithium transition metal oxide and/or the second lithium transition metal oxide become excessively large, resulting in degradation of kinetic characteristics.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S₅-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃xLa₃Zr₂AlₓO₁₂, Li₃xLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack comprising the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of Positive Electrode Active Material

### 1. Preparation of PAM1

A NiCoMn(OH)₂ hydroxide precursor (Ni:Co:Mn = 96:2:2 (at%)) was synthesized using nickel sulfate, cobalt sulfate and manganese sulfate by a known co-precipitation method.

The hydroxide precursor, LiOH (Li/(Ni+Co+Mn) mol ratio = 1.02) and Ba(OH)₂·H₂O were mixed to prepare a mixture. Ba(OH)₂·H₂O was mixed to be 0.5 mol% with respect to all metal elements excluding lithium in the mixture. Subsequently, the mixture was heat-treated (primary calcination) in an O₂ atmosphere at 830°C for 8 hours to obtain an intermediate product.

Subsequently, after mixing the intermediate product with 2 mol% of Co(OH)₂, the resulting mixture was heat-treated (secondary calcination) in an O₂ atmosphere at 770°C for 8 hours to obtain a final product, i.e., a positive electrode active material including a lithium transition metal oxide.

### 2. Preparation of PAM2

PAM2 was prepared in the same manner as PAM1, except that the primary calcination temperature was 810°C.

### 3. Preparation of PAM3

A NiCoMn(OH)₂ hydroxide precursor (Ni:Co:Mn = 96:2:2 (at%)) was synthesized using nickel sulfate, cobalt sulfate and manganese sulfate through a known co-precipitation method.

A solution including the hydroxide precursor at a solid content at 30 wt% was milled using a bead mill such that D₅₀ became 300 nm. Subsequently, the milled solution was spraydried to obtain a NiCoMn(O) oxide precursor.

The oxide precursor, LiOH (Li/(Ni+Co+Mn) mol ratio = 1.02) and Ba(OH)₂·H₂O were mixed to prepare a mixture. Ba(OH)₂·H₂O was mixed to be 0.5 mol% with respect to all metal elements excluding lithium in the mixture. Subsequently, the mixture was heat-treated (primary calcination) in an O₂ atmosphere at 830°C for 8 hours, and pulverized once with a jet mill at 18,000 rpm to obtain an intermediate product.

Subsequently, after mixing the intermediate product with 2 mol% of Co(OH)₂, the resulting mixture was heat-treated (secondary calcination) in an O₂ atmosphere at 770°C for 8 hours to obtain a final product, i.e., a positive electrode active material including a lithium transition metal oxide.

### 4. Preparation of PAM4

PAM4 was prepared in the same manner as PAM3 except that the primary calcination temperature was 810°C.

### Preparation Example 2. Preparation of Lithium Secondary Battery (Half-Cell)

A positive electrode slurry was prepared by dispersing 94 wt% of each positive electrode active material prepared according to Preparation Example 1, 3 wt% of carbon black, and 3 wt% of a PVDF binder in 30 g of N-methyl-2-pyrrolidone (NMP). The positive electrode slurry was uniformly applied to an aluminum thin film having a thickness of 15 µm and vacuum-dried at 135°C, thereby preparing a positive electrode for a lithium secondary battery.

A half-cell was prepared using lithium foil as a counter electrode for the positive electrode, a porous polyethylene film (Celgard 2300, thickness: 25 µm) as a separator, and an electrolyte solution containing LiPF₆ at a concentration of 1.15 M in a solvent in which ethylene carbonate and ethyl methyl carbonate were mixed at a volume ratio of 3:7.

### Experimental Example 1. Cross-sectional SEM Analysis of Positive Electrode Active Material

After obtaining a cross-sectional SEM image of the lithium transition metal oxide included in the positive electrode active material prepared according to Preparation Example 1 using FE-SEM (Bruker Co.), the proportions of the lithium transition metal oxide consisting of a single grain (first lithium transition metal oxide) and the lithium transition metal oxide in which a plurality of grains are agglomerated (second lithium transition metal oxide) observed from the cross-sectional SEM image were calculated.

In addition, based on the cross-sectional SEM image of the positive electrode active material, the size and number of all grains constituting the positive electrode active material and the proportion of grains isolated by being surrounded by a plurality of grains among all grains were calculated, and a grain size (D₁₀) at which the volume cumulative amount becomes 10%, a grain size (D₅₀) at which the volume cumulative amount becomes 50%, and a grain size (D₉₀) at which the volume cumulative amount becomes 90% were calculated from a volume cumulative particle size distribution graph for grains constituting the positive electrode active material.

FIG. 1 is the cross-sectional SEM image of PAM1, FIG. 2 is the cross-sectional SEM image of PAM2, FIG. 3 is the cross-sectional SEM image of PAM3, and FIG. 4 is a cross-sectional SEM image of PAM4.

The analysis results are shown in Table 1 below.

**[Table 1]**

| Classification | A | B | C | D | E | F | G | H | I |
|---|---|---|---|---|---|---|---|---|---|
| Units | % | % | ea | ea | % | µm | µm | µm | - |
| PAM1 | 8.0 | 92.0 | 113 | 14 | 12.39 | 2.2 | 3.7 | 4.6 | 0.65 |
| PAM2 | 7.3 | 92.7 | 164 | 25 | 15.24 | 1.75 | 3.1 | 4.95 | 1.03 |
| PAM3 | 45.0 | 55.0 | 40 | 1 | 2.50 | 2.43 | 3.7 | 4.63 | 0.59 |
| PAM4 | 20.8 | 79.2 | 106 | 5 | 4.72 | 1.96 | 3.1 | 3.85 | 0.61 |

| | | | | | | | | | |
|---|---|---|---|---|---|---|---|---|---|
| A: The proportion of a lithium transition metal oxide consisting of a single grain (first lithium transition metal oxide) among all lithium transition metal oxides constituting the positive electrode active material B: The proportion of a lithium transition metal oxide in which a plurality of grains are agglomerated (second lithium transition metal oxide) among all lithium transition metal oxides constituting the positive electrode active material C: The total number of grains constituting the positive electrode active material D: The number of grains isolated by being surrounded by a plurality of grains among all grains E: The proportion of grains isolated by being surrounded by a plurality of grains among all grains F: The grain size (D₁₀) at which the volume cumulative amount becomes 10% G: The grain size (D₅₀) at which the volume cumulative amount becomes 50% H: The grain size (D₉₀) at which the volume cumulative amount becomes 90% I : (the grain size at which the volume cumulative amount becomes 90% - the grain size at which the volume cumulative amount becomes 10%)/the grain size at which the volume cumulative amount becomes 50% | | | | | | | | | |

### Experimental Example 2. Evaluation of Electrochemical Characteristics of Lithium Secondary Battery (Half-Cell)

Initial charge capacity, initial discharge capacity and initial efficiency were measured for the lithium secondary battery (half-cell) prepared in Preparation Example 2 through a charge/discharge experiment conducted at 25°C in a voltage range of 3.0 V to 4.3 V, and at a discharge rate of 1.0 C/0.1 C using an electrochemical analyzer (Toyo, Toscat-3100).

The measurement results are shown in Table 2 and Table 3 below.

**[Table 2]**

| Classification | D₅₀ | Charge capacity | Discharge capacity | Initial efficiency |
|---|---|---|---|---|
| Units | µm | mAh/g | mAh/g | % |
| PAM1 | 3.7 | 239.4 | 201.0 | 84.0 |
| PAM3 | 3.7 | 239.8 | 202.9 | 84.6 |

**[Table 3]**

| Classification | D₅₀ | Charge capacity | Discharge capacity | Initial efficiency |
|---|---|---|---|---|
| Units | µm | mAh/g | mAh/g | % |
| PAM2 | 3.1 | 243.1 | 208.1 | 85.6 |
| PAM4 | 3.1 | 243.5 | 211.3 | 86.8 |

Since capacity characteristics may vary depending on the average particle diameter of the lithium transition metal oxide constituting the positive electrode active material, the capacity characteristics of positive electrode active materials in which the lithium transition metal oxides constituting the positive electrode active material have the same average particle diameter were compared to confirm whether the proportion of grains isolated by being surrounded by a plurality of grains affects the capacity characteristics of the positive electrode active material.

When comparing PAM1 and PAM3 in which D₅₀ is 3.7 µm, it can be confirmed that the charge capacity, discharge capacity and initial efficiency of PAM3, which has a lower proportion of grains isolated by being surrounded by a plurality of grains than PAM1, were improved. Similarly, when comparing PAM2 and PAM4 in which D₅₀ is 3.1 µm, the charge capacities of PAM2 and PAM4 are almost the same, but it can be confirmed that the discharge capacity of PAM4, which has a lower proportion of grains isolated by being surrounded by a plurality of grains than PAM2, and the initial efficiency resulting therefrom were improved. That is, even if the particle diameter of the lithium transition metal oxide is the same, by reducing the proportion of isolated grains in the lithium transition metal oxide, it can contribute to an improvement in capacity characteristics.

Although the embodiments of the present invention have been described above, those of ordinary skill in the art will be able to variously modify and change the present invention by modification, change, deletion or addition and the like of constituent elements within a range not departing from the spirit of the present invention described in the claims, and this will also be included within the scope of rights of the present invention.

## Claims

1. A positive electrode active material comprising a lithium transition metal oxide consisting of a single grain and a lithium transition metal oxide in which a plurality of grains are agglomerated,
wherein, based on a cross-sectional SEM image of the positive electrode active material, the proportion of grains isolated by being surrounded by a plurality of grains among all grains constituting the positive electrode active material is 10% or less.

2. The positive electrode active material of claim 1, wherein, based on the cross-sectional SEM image of the positive electrode active material, the proportion of grains isolated by being surrounded by a plurality of grains among all grains constituting the positive electrode active material is 1.5% or more.

3. The positive electrode active material of claim 1, wherein, based on the cross-sectional SEM image of the positive electrode active material, the proportion of a lithium transition metal oxide consisting of a single grain among all lithium transition metal oxides constituting the positive electrode active material is greater than 8% and 70% or less.

4. The positive electrode active material of claim 1, wherein, based on the cross-sectional SEM image of the positive electrode active material, the proportion of a lithium transition metal oxide in which a plurality of grains are agglomerated among all lithium transition metal oxides constituting the positive electrode active material is 30% or more and less than 92%.

5. The positive electrode active material of claim 1, wherein an average particle diameter (D₅₀) of the lithium transition metal oxide consisting of a single grain is 0.2 µm or more and 5.0 µm or less.

6. The positive electrode active material of claim 1, wherein an average particle diameter (D₅₀) of the lithium transition metal oxide in which a plurality of grains are agglomerated is 1.0 µm or more and 10.0 µm or less.

7. The positive electrode active material of claim 1, wherein the positive electrode active material satisfies Formula 1 below: [Formula 1] $\left({D}_{90}-{D}_{10}\right) / {D}_{50} < 0.65$
wherein, in Formula 1,
based on the cross-sectional SEM image of the positive electrode active material, in a volume cumulative particle size distribution graph for grains constituting the positive electrode active material, D₁₀ denotes a grain size at which the volume cumulative amount becomes 10%, D₅₀ denotes a grain size at which the volume cumulative amount becomes 50%, and D₉₀ denotes a grain size at which the volume cumulative amount becomes 90%.

8. The positive electrode active material of claim 7, wherein, based on the cross-sectional SEM image of the positive electrode active material, the grain size (D₅₀) at which the volume cumulative amount becomes 50% in a volume cumulative particle size distribution graph for grains constituting the positive electrode active material is 2.0 µm or more and 5.0 µm or less.

9. The positive electrode active material of claim 7, wherein, based on the cross-sectional SEM image of the positive electrode active material, the grain size (D₁₀) at which the volume cumulative amount becomes 10% in a volume cumulative particle size distribution graph for grains constituting the positive electrode active material is greater than 1.75 µm and 3.0 µm or less.

10. The positive electrode active material of claim 7, wherein, based on the cross-sectional SEM image of the positive electrode active material, the grain size (D₉₀) at which the volume cumulative amount becomes 90% in a volume cumulative particle size distribution graph for grains constituting the positive electrode active material is 3.0 µm or more and 4.9 µm or less.

11. The positive electrode active material of claim 1, wherein the lithium transition metal oxide includes at least lithium and transition metals, and
the content of nickel among the transition metals is 70 mol% or more.

12. The positive electrode active material of claim 1, wherein the lithium transition metal oxide has an average composition represented by Chemical Formula 1 below:
[Chemical Formula 1] LiₐNi_{1-(b+c+d)}Co_{b}Mn_{c}M1_{d}O₂
wherein, in Chemical Formula 1,
M1 is at least one selected from Na, K, Mg, Ba, B, Ce, Hf, Ta, Cr, F, Al, V, Ti, Fe, Zr, Zn, Si, Y, Nb, Ga, Sn, Mo, P, Sr, Ge, Nd, Gd and Cu, and
0.95≤a≤1.15, 0≤b≤0.20, 0≤c≤0.20, 0≤d≤0.10, and 0.7≤1-(b+c+d).

13. A positive electrode comprising the positive electrode active material according to any one of claims 1 to 12.

14. A lithium secondary battery using the positive electrode according to claim 13.
